Europäisches Patentamt

European Patent Office

Office européen des brevets

(11) Publication number: **0 245 618 B1**

# EUROPEAN PATENT SPECIFICATION

(45) Date of publication of patent specification: 15.05.91    (51) Int. Cl.⁵: **F24C  15/32**

(21) Application number: 87103969.9

(22) Date of filing: 18.03.87

(54) Hot air circulating cooker.

(30) Priority: 15.05.86 JP 111110/86
                24.06.86 JP 147540/86

(43) Date of publication of application:
      19.11.87 Bulletin  87/47

(45) Publication of the grant of the patent:
      15.05.91 Bulletin  91/20

(84) Designated Contracting States:
      **DE FR GB**

(56) References cited:
      **DE-A- 2 657 267**
      **DE-B- 2 339 446**
      **DE-B- 2 557 867**

(73) Proprietor: **KABUSHIKI KAISHA TOSHIBA
72, Horikawa-cho Saiwai-ku
Kawasaki-shi Kanagawa-ken 210(JP)**

(72) Inventor: **Arabori, Yoshinari c/o Patent Division
Kabushiki Kaisha Toshiba 1-1 Shibaura
1-chome
Minato-ku Tokyo 105(JP)**
Inventor: **Sumida, Shigekazu c/o Patent Division
Kabushiki Kaisha Toshiba 1-1 Shibaura
1-chome
Minato-ku Tokyo 105(JP)**

(74) Representative: **Henkel, Feiler, Hänzel & Partner
Möhlstrasse 37
W-8000 München 80(DE)**

## Description

The present invention relates to a hot air circulating cooker for heating and cooking food in a heating chamber by supplying hot air to the heating chamber using a fan as is disclosed for example in DE-B-2 557 867.

Such a hot air circulating cooker has an inner casing defining a heating chamber and a disk-like cover attached on the outer surface of the rear wall of the inner casing. The cover and the rear wall define a fan chamber. A hot air circulating fan and a heater are provided in the fan chamber. A plurality of suction holes are cut by punching in the central portion of the rear wall. Discharge holes are cut by punching in rectangular areas in the rear wall. The fan opposes the suction holes and is driven by a motor provided outside the cover. The heater has an annular shape and is provided around the fan.

When the fan and heater are operated, the air in the heating chamber is drawn into the fan chamber through the suction holes and is heated by the heater. The hot air is blown into the heating chamber through the discharge holes. As a result, the hot air is circulated in the heating chamber to heat and cook food in the heating chamber.

In the cooker having the above arrangement, means are provided in the outlet of the fan chamber to cause turbulent flow of the hot air blown into the heating chamber.

However, this arrangement cannot provide sufficiently whirled air at a moderate flowing speed that is supplied uniformly at the discharge holes into the heating chamber. This causes the food in the heating chamber to be nonuniformly cooked.

The present invention has been made in view of the above situation and has as its object to provide a hot air circulating cooker which can uniformly discharge hot air from its discharge holes, thereby decreasing nonuniform heating of food.

In order to achieve the above object, a cooker according to the present invention comprises the features as claimed in claim 1.

This invention can be more fully understood from the following detailed description when taken in conjunction with the accompanying drawings, in which:

Figs. 1 to 4 show a hot air circulating cooker according to a first embodiment of the present invention, in which Fig. 1 is a longitudinal sectional view of the cooker, Fig. 2 is a sectional view taken along the line II - II of Fig. 1, Fig. 3 is a front view of the same including a fan and a heater, and Fig. 4 is a partial enlarged view of Fig. 3;

Figs. 5 to 8 are front views corresponding to Fig. 3 and showing first to fourth modifications of an airflow-directing plate, respectively; and

Figs. 9 and 10 show a fifth modification of the airflow-directing plate, in which Fig. 9 is a front view corresponding to Fig. 3 and Fig. 10 is a sectional view of a part of a cooker including an airflow-directing plate.

The embodiments of the present invention will be described in detail with reference to the accompanying drawings.

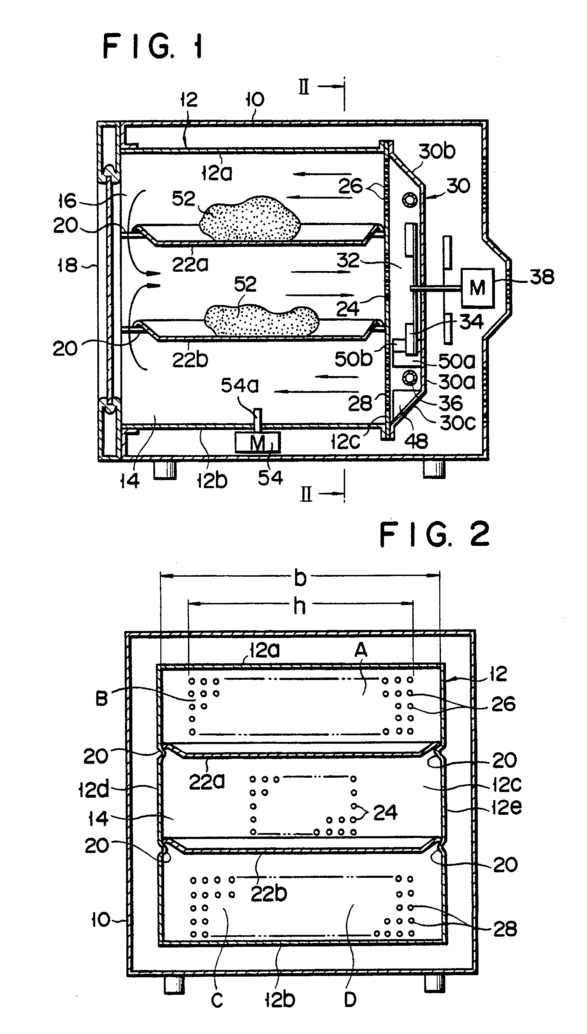

As shown in Figs. 1 to 3, a cooker has outer casing 10 and inner casing 12 which is provided in casing 10 and defines heating chamber 14. Casing 12 is a box having top and bottom plates 12a and 12b and three side plates 12c to 12e. The front portion of casing 12 is opened to constitute inlet/outlet port 16 for allowing food to be placed in and removed from heating chamber 14 therethrough. Port 16 is opened/closed by door 18 attached to casing 10.

A pair of horizontal support rails 20 are formed on the inner surface of each of side walls 12d and 12e. Upper and lower cooking trays 22a and 22b are arranged in heating chamber 14 while their side edges are put on rails 20. Rails 20 are positioned such that the distances between top plate 12a of casing 12 and tray 22a, between trays 22a and 22b, and between tray 22b and bottom plate 12b are substantially the same.

A plurality of suction holes 24 are cut by punching in the central portion of side plate 12c constituting the rear plate of casing 12 and are distributed in a rectangular form. Holes 24 are located between cooking trays 22a and 22b. A plurality of upper and lower discharge holes 26 and 28 are formed in rear plate 12c and located above and below suction holes 24, respectively. Upper discharge holes 26 are arranged in a rectangular area which extends throughout substantially the entire width of plate 12c and are located between top plate 12a and upper cooking tray 22a. Lower discharge holes 28 are arranged in a rectangular area which extends throughout substantially the entire width of plate 12c and are located between bottom plate 12b and lower cooking tray 22b.

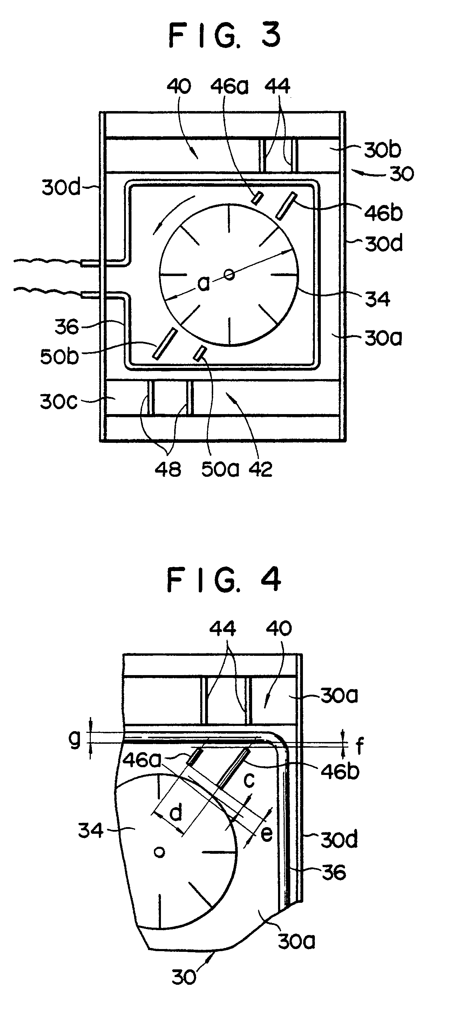

Rectangular disk-like cover 30 is fixed to the outer surface of rear plate 12c. Cover 30 and plate 12c define storing chamber 32. Chamber 32 communicates with heating chamber 14 through suction holes 24 and discharge holes 26 and 28. As is apparent from Figs. 1 and 3, cover 30 has bottom plate 30a opposing rear plate 12c, upper and lower inclined plates 30b and 30c extending in the horizontal direction, and a pair of side plates 30d extending in the vertical direction. Plates 30b and 30c oppose upper and lower discharge holes 26 and 28, respectively. In chamber 32, fan 34 is arranged so as to face suction holes 24, and substantially annular electric heater 36 is provided to surround fan 34. Fan 34 is rotated by motor 38, provided outside cover 30, in a predetermined direction, i.e., counterclockwise in Fig. 3.

As indicated by arrows in Fig. 1, when fan 34 is rotated, air in heating chamber 14 is drawn from suction holes 24 into storing chamber 32. After being heated by heater 36, the air is guided by upper and lower plates 30b and 30c and discharged from upper and lower discharge holes 26 and 28 into heating chamber 14.

With the above arrangement, the hot air in storing chamber 32 flows counterclockwise to make a whirl. Thus, the hot air to be blown from holes 26 and 28 is biased to the upstream side of the hot air flow. More specifically, as shown in Fig. 2, the amount of hot air discharged from some holes 26 in region B located at the downstream side of the hot air flow in storing chamber 32 is larger than that discharged from some other holes 26 in region A at the upstream side of the hot air flow. Similarly, the amount of hot air discharged from some holes 28 in region D located at the downstream side of the hot air flow in storing chamber 32 is larger than that discharged from some other holes 28 in region C at the upstream side. Therefore, in order to prevent the unbalance of the amount in discharged hot air, according to this embodiment, upper and lower airflow-directing mechanisms 40 and 42 are provided in chamber 32 so as to face regions A and C, respectively.

As shown in Figs. 3 and 4, upper airflow-directing mechanism 40 has a pair of first airflow-directing plates 44 and a pair of second airflow-directing plates 46a and 46b. First plates 44 have a triangular shape, are fixed to upper plate 30b of cover 30, and extend in the vertical direction. Second plates 46a and 46b are perpendicularly fixed to bottom plate 30a of cover 30 and located between the outer periphery of fan 34 and heater 36. Plates 46a and 46b have a rectangular shape. Plate 46a is shorter than plate 46b. Plates 46a and 46b are arranged parallel to each other and extend from the regions close to the lower ends of first airflow-directing plates 44 toward the rotational center of fan 34.

Similarly, lower airflow-directing mechanism 42 has a pair of first airflow-directing plates 48 and a pair of second airflow-directing plates 50a and 50b. First plates 48 and second plates 50a and 50b are point-symmetrical to first plates 44 and second plates 46a and 46b, respectively, with respect to the rotational center of fan 34. In other words, first plates 48 are fixed to lower plate 30c of cover 30 and extend in the vertical direction, and second plate 50a and 50b are fixed to bottom plate 30a of cover 30 and located between the outer periphery of fan 34 and heater 36.

The sizes of the respective portions of first and second airflow-directing mechanisms 40 and 42 are set as follows so as to provide a good airflow-directing effect.

As shown in Figs. 2 to 4, diameter a of fan 34 is set in a range of about 1/2 to 1/3 width b of heating chamber 14. In other words, assuming that width b is 300 mm, diameter a of fan 34 is 130 mm. In upper airflow-directing mechanism 40, distance c between second airflow-directing plate 46b and the outer periphery of fan 34 is set to be about 1/10 to 1/20 diameter a of fan 34 and is, in this embodiment, 9 mm. Distance e between second airflow-directing plate 46a and the outer periphery of fan 34 is set to be about 1/5 to 1/10 diameter a of fan 34 and is, in this embodiment, 19 mm. Distance d between plates 46a and 46b is set in a range of about 1/3 to 1/6 diameter a of fan 34 and is, in this embodiment, 33 mm. Distance between first airflow-directing plates 44 corresponds to distance d.

Distance f between second airflow-directing plates 46a and 46b, and heater 36 is set in a range of about 1/2 to 1/10 diameter g of heater 36. A general heater has diameter g of about 7 mm and hence distance f is set to 1 mm. Width h of the regions, wherein upper and lower discharge holes 26 and 28 are formed, is set to 2/3 or more of width b of heating chamber 14 (h ≧ 200 mm). Holes 26 and 28 are uniformly distributed in the right and left portions of heating chamber 14 so that the hot air uniformly reaches the entire area of heating chamber 14.

The airflow-directing plates of lower airflow-directing mechanism 42 have sizes similar to those of upper airflow-directing mechanism 40 and a description thereof is omitted.

In Fig. 1, reference numeral 54 denotes a motor. Rotation shaft 54a of motor 54 extends into heating chamber 14 through bottom plate 12b of casing 12. With cooking trays 22a and 22b not in use, a turntable (not shown) is placed in engagement with rotation shaft 54a within heating chamber 14 such that it may be rotated by motor 54. The cooker is also further provided with a magnetron (not shown) and can be used as a microwave oven.

The operation of the cooker having the above arrangement will be described.

When a large amount of food is heated and cooked simultaneously, upper and lower cooking trays 22a and 22b placing food 52 thereon are set in heating chamber 14 through inlet/outlet port 16. After door 18 is closed, an operating section (not shown) is operated to energize motor 38 and heater 36. When fan 34 is rotated counterclockwise by motor 38, the air between trays 22a and 22b in chamber 14 is drawn into storing chamber 32 through suction holes 24. The sucked air flows to the periphery of fan 34, and makes a counterclockwise whirl around fan 34. At the same time, the air is heated by heater 36.

The hot air abuts against upper and lower plates 30b and 30c of cover 30 and directed toward rear plate 12c of inner casing 12. Thus, the hot air is discharged from discharge holes 26 and 28 into heating chamber 14. The hot air from holes 26 is blown into a space between top plate 12a of casing 12 and upper cooking tray 22a, and the hot air from holes 28 is blown into a space between bottom plate 12b of casing 12 and lower cooking tray 22b.

In the upper region of storing chamber 32, part of the hot air is prevented by airflow-directing plates 44, 46a and 46b of upper airflow-direction mechanism 40 from flowing along the rotating direction of fan 34 and guided to a region opposing upstream-side region A of discharge holes 26. The hot air is then directed toward rear plate 12c by upper plate 30b of cover 30 and discharged to heating chamber 14 through discharge holes 26 at upstream-side region A. The remaining hot air is discharged from holes 26 located at downstream-side region B.

Similarly, in the lower region of storing chamber 32, part of the hot air is prevented by lower airflow-directing mechanism 42 from flowing along the rotating direction of fan 34 and discharged to heating chamber 14 through discharge holes 28 located at upstream-side region C. The remaining hot air is discharged from holes 28 located at downstream-side region D. As a result, the hot air is not biased in a single direction but is uniformly discharged from holes 26 and 28 of the respective regions.

As described above, according to the hot air circulating cooker having the above arrangement, the amount of hot air discharged from discharge holes 26 and 28 located at upstream-side regions A and C is increased because of the straightening function of upper and lower airflow-directing mechanisms 40 and 42, and becomes equal to that discharged from holes 26 and 28 located at downstream-side regions B and D. As a result, imbalance in amount of discharged hot air between the holes in the upstream- and downstream-side regions is eliminated, and hot air can be uniformly supplied to the entire portion in the heating chamber. Thus, a hot air does not locally blow against part of food in the heating chamber, and nonuniform heating and cooking caused by the nonuniform hot air amount can be prevented. According to this embodiment, in addition to the first airflow-directing plates, each airflow-directing mechanism has the second airflow-directing plates that extend to the regions close to the outer periphery of fan 34. Therefor, the hot air can be guided to the discharge holes located in the upstream-side region immediately after fan rotation is started.

The sizes of the respective portions were examined in an experiment, and most effective, uniform supply of hot air was obtained when sizes a to g were set in the ranges described above. When the sizes of the respective portions are out of the above described ranges, the following problems arose.

For example, when diameter a of fan 34 exceeded 1/2 width b of heating chamber 14, the distance between the outer periphery of fan 34 and heater 36 was decreased, and the straightening effect by upper and lower airflow-directing mechanisms 40 and 42 was excessive, resulting in nonuniform heating. In accordance with increase of diameter a, the discharge amount of hot air was decreased. Conversely, when diameter a was set to be less than 1/3 width b, the flow amount by fan 34 was decreased, and the supply of hot air to heating chamber 14 was delayed.

When distance c between the second airflow-directing plate and the outer periphery of fan 34 exceeded 1/10 diameter a of fan 34, the straightening effect by the airflow-directing mechanism was degraded, and the cooked color of the food placed on the left portion of upper cooking tray 22a in Fig. 2 was darker. Conversely, when distance c was less than 1/20 diameter a, the cooked color of the food placed on the left front portion of tray 22a was extremely pale. A change in distance e caused effects similar to that in distance c described above.

When distance d between the second airflow-directing plates exceeded 1/3 diameter a of fan 34, the straightening effect by the airflow-directing mechanism was excessive, and nonuniform heating occurred. When distance d was less than 1/6 diameter a, the hot air blowing state was the same as in the case wherein no airflow-directing mechanism was provided.

When distance f between the second airflow-directing plate and heater 36 exceeds 1/2 diameter g of heater 36, hot air leaks from a gap between the airflow-directing plates and heater 36, and the blow amount of air straightened by the airflow-directing mechanism is decreased. As a result, nonuniform heating occurs. When distance f is less than 1/10 diameter g, the second airflow-directing plates may unpreferably contact heater 36 by vibration during operation of the cooker of impact when the cooker is being moved.

When the sizes of the respective portions are set properly as in the above embodiment, the above-mentioned problem can be solved, and hot air can be blown into the heating chamber with good balance.

The present invention is not limited to the above embodiment but various changes and modifications may be made within the spirit and scope of the invention.

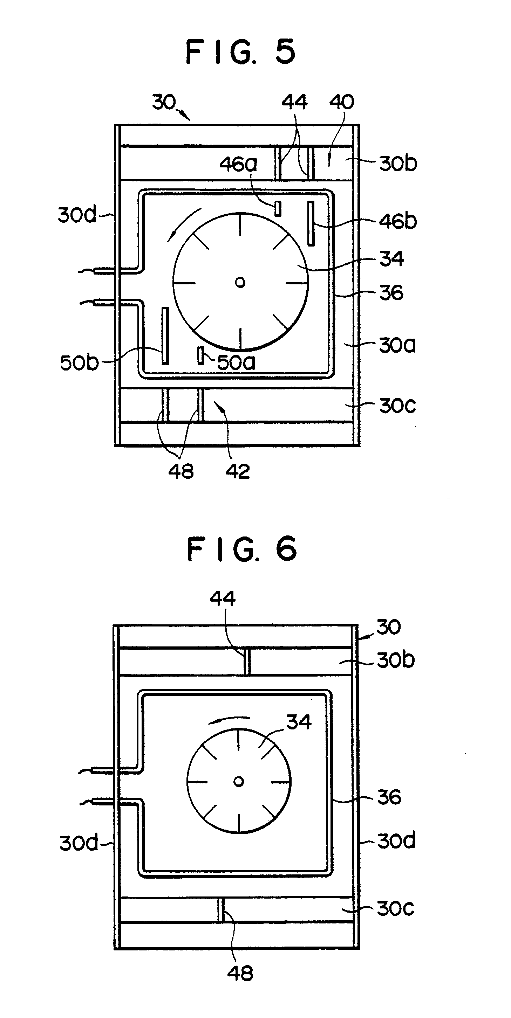

For example, in the embodiment, each airflow-directing mechanism has a pair of second airflow-directing plates. However, the inner one, i.e., the smaller one of the second airflow-directing plates can be omitted. Second airflow-directing plates 46a and 46b, or 50a and 50b can be arranged in the vertical direction as shown in Fig. 5. In this case, the dimensional relationship among the width of heating chamber 14, the diameter of fan 34, the distance between fan 34 and the airflow-directing plates, and the distance between the second airflow-directing plates and heater 36; and the sizes and mounting positions of the first and second airflow-directing plates are set so as to obtain hot air blowing characteristics to effectively decrease nonuniform heating.

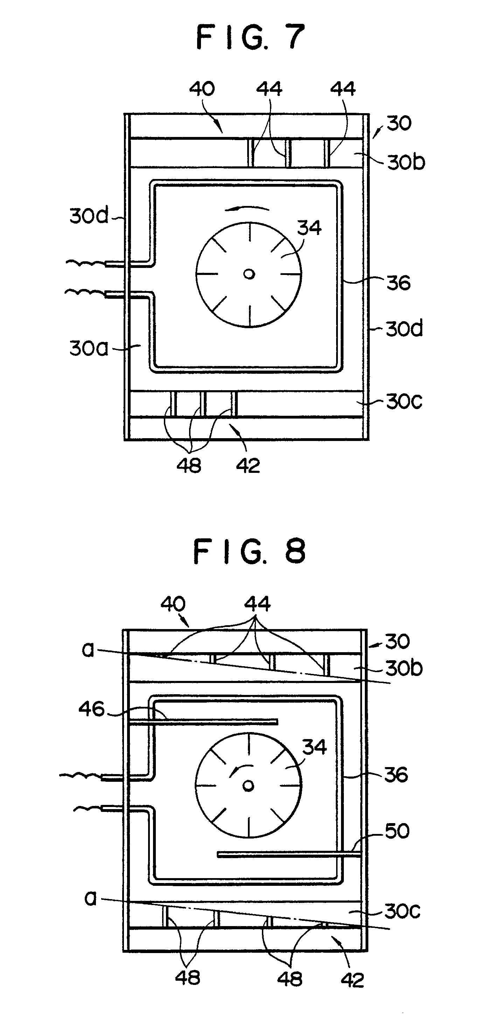

As shown in Figs. 6 and 7, each airflow-directing mechanism can be constructed by only first airflow-directing plates. The number of the first airflow-directing plates is increased/decreased as needed, and the sizes and mounting positions thereof are properly set. However, first airflow-directing plate 44 of upper airflow-directing mechanism 40 and airflow-directing plate 48 of lower airflow-directing mechanism 42 are point-symmetrically arranged with respect to the rotational center of fan 34, irrespective of the number of the first airflow-directing plates. When the number of the airflow-directing plates is increased, the hot air blow amount can be finely adjusted.

In the modification shown in Fig. 8, upper airflow-directing mechanism 40 has a plurality of first airflow-directing plates fixed to upper plate 30b of cover 30. These plates 44 are separated from each other at the same intervals along the horizontal direction and extend in the vertical direction. The lengths of respective airflow-directing plates 44 are set such that a line connecting the lower ends of plates 44 coincides with diagonal line a of plate 30b. This increases straightening effect in a region at the upstream-side of the hot air flow. Airflow-directing mechanism 40 has second airflow-directing plate 46 located in the upper region of storing chamber 32. Plate 46 extends substantially horizontally from side plate 30d of cover 30, located at the downstream side of the hot air flow, to the substantially central portion of storing chamber 32. Plate 46 is positioned between fan 34 and heater 36. Similarly, lower airflow-directing mechanism 42 has a plurality of first airflow-directing plates 48 and second airflow-directing plate 50 and is point-symmetrical with mechanism 40 with respect to the rotational center of fan 34.

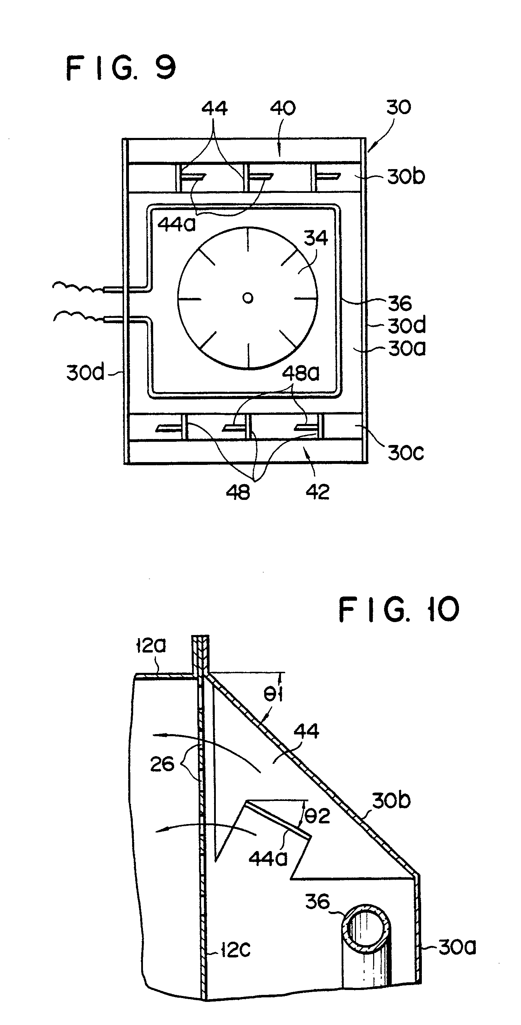

In the modification shown in Figs. 9 and 10, airflow-directing mechanisms 40 and 42 have a plurality of airflow-directing plates 44 and 48 fixed to the inclined plates of cover 30, i.e., upper and lower plates 30b and 30c and extending in the vertical direction, respectively. Straightening plate 44a (48a) horizontally extends from each airflow-directing plate. Each plate 44a or 48a is formed by cutting part of the corresponding wind-directing plate and bending the cut portion upright, or fixing a separate plate on the corresponding airflow-directing plate by spot welding or the like. Assuming that the inclined angle of upper plate 30b with respect to the horizontal plane is $\theta1$, plate 44a is inclined at angle $\theta2$ (the same as or smaller than angle $\theta1$) with respect to the horizontal plane. Plate 48a is also inclined at a predetermined angle with respect to the horizontal plane.

In the above modification, the air supplied from fan 34 is straightened by airflow-directing plates 44 and 48 and partially directed by straightening plates 44a and 48a in a direction different from that of the air directed by inclined plates 30b and 30c of cover 30. As a result, the hot air is sufficiently dispersed and uniformly discharged in heating chamber 14.

In Figs. 5 to 10, the same portions as in the above embodiment are indicated by the same reference numerals and a detailed description thereof is omitted.

A plate for fixing the cover defining the storing chamber is not limited to the rear plate of the inner casing, but can be another side plate.

## Claims

1. A hot air circulating cooker, comprising:

a box-like casing (12) having top and bottom plates (12a, 12b) and a plurality of side plates (12c, 12d, 12e) and defining a heating chamber (14) for storing food therein, one of the side plates (12c) having a plurality of suction holes (24) formed in a central portion thereof, pluralities of discharge holes (26, 28),

a cover (30) fixed to the outer surface of said one side plate (12c), for defining, associated with said one side plate (12c), a storing chamber (32) communicating with the suction holes (24) and the discharge (26, 28) holes;

a fan (34) arranged in the storing chamber to face the suction holes (24) and rotated in a predetermined direction, for drawing air in the heating chamber (14) into the storing chamber (31) through the suction holes (24), causing the air to flow in an annular passage in the predetermined direction within the storing chamber (32), and discharging the air into the heating chamber (14) through the discharge (26, 28) holes;

a heater (36) located in the storing chamber (32) along the outer periphery of the fan (34), for heating the air sucked into the storing chamber; and

airflow-directing means provided in the storing chamber (32), for guiding part of the air flow to the discharge holes (26, 28);

characterized in that:

one plurality of upper discharge holes (26) is formed in a first area which is located above the suction holes (24) and extends in the horizontal direction, and another plurality of lower discharge holes (28) is formed in a second area which is located below the suction holes (24) and extends in the horizontal direction;

said cover (30) includes a bottom plate (30a) separated from and facing said one side plate (12c), an upper plate (30b) opposing the upper discharge holes (26) and extending in the horizontal direction, the upper plate (30b) being inclined so as to direct the airflow toward the upper discharge holes (26), and a lower plate (30c) opposing the lower discharge holes (28) and extending in the horizontal direction, the lower plate (30c) being inclined so as to direct the air flow toward the lower discharge holes (28);

said airflow-directing means includes upper and lower airflow-directing means (40, 42), said upper airflow-directing means (40) having at least one airflow-directing plate (44) fixed to the upper plate (30b) of the cover (30), for preventing part of the airflow from the fan (34) from flowing in said predetermined direction and guiding said part of the airflow to those of the upper discharge holes (26) which are located upstream of that part of said annular passage which is located in said first area, and said lower airflow-directing means (42) having at least one airflow-directing plate (48) fixed to the lower plate (30c) of the cover (30), for preventing part of the airflow from the fan (34) from flowing in said predetermined direction and guiding said part of the airflow to those of the lower discharge holes (28) which are located upstream of that part of said annular passage which is located in said second area, said airflow-direction plates (44, 48) being arranged outside the heater (36).

2. A cooker according to claim 1, characterized in that said airflow-directing plates (44, 48) of the upper and lower airflow-directing means (40, 42) are arranged to be point-symmetrical to each other with respect to a rotational center of the fan (34).

3. A cooker according to claim 1, characterized in that each of said airflow-directing plates (44, 48) extends in the vertical direction.

4. A cooker according to claim 1, characterized in that said upper airflow-directing means (40) includes a second airflow-directing plate (46a) which is fixed to the bottom plate (30a) of the cover (30), located between the fan (34) and the heater (36), and provided contiguously with the airflow-directing plate (44), and said lower airflow-directing means (42) includes a second airflow-directing plate (50a) which is fixed to the bottom plate (30a) of the cover (30), located between the fan (34) and the heater (36), and provided contiguously with the airflow-directing plate (48).

5. A cooker according to claim 4, characterized in that each of said second airflow-directing plates (46a, 50a) extends from the region close to the corresponding airflow-directing plate toward the rotational center of the fan (34).

6. A cooker according to claim 4, characterized in that a diameter of said fan (34) is set in a range of about 1/2 to 1/3 the width in the horizontal direction of the heating chamber (14).

7. A cooker according to claim 4, characterized in that a distance between said second airflow-directing plates (46a, 50a) and the periphery of the fan (34) is set in a range of about 1/10 to 1/20 a diameter of the fan (34).

8. A cooker according to claim 4, characterized in that said upper airflow-directing means (40) includes a third airflow-directing plate (46b) provided parallel to the second airflow-directing plate (46a) on the downstream side of the air flow in the storing chamber (32) with respect to the second airflow-directing plate (46a), said lower airflow-directing means (42) includes a third airflow-directing plate (50b) provided parallel to the second airflow-directing plate (50a) on the downstream side of the air flow in the storing chamber (32) with respect to the second airflow-directing plate (50a), and distances between the second and third airflow-directing plates are set in a range of about 1/3 to 1/6 the diameter of the fan (34).

9. A cooker according to claim 8, characterized in that distance between each of said third airflow-directing plates (46b, 50b) and the periphery of the fan (34) is set in a range of about 1/5 to 1/10 the diameter of the fan.

10. A cooker according to claim 8, characterized in that distance between each of said second and third airflow-directing plates (46a, 46b, 50a, 50b) and the periphery of the heater (36) is set in a range of about 1/2 to 1/10 a diameter of the heater.

11. A cooker according to claim 1, characterized in that:

said upper airflow-directing means (40) has a plurality of airflow-directing plates (44) fixed to the upper plate, the airflow-directing plates being separated from each other at equal intervals along the horizontal direction and extending in the vertical direction; and

said lower airflow-directing means (42) has a plurality of airflow-directing plates (48) fixed to the lower plate, the airflow-directing plates being separated from each other at equal intervals along the horizontal direction and extending in the vertical direction.

12. A cooker according to claim 11, characterized in that lengths of said airflow-directing plates (44, 48) of the upper and lower airflow-directing means (40, 42) in the vertical direction are gradually decreased from one located at the upstream side of the air flow in the storing chamber (32) to one located at the downstream side thereof.

13. A cooker according to claim 11, characterized in that each of said airflow-directing plates (44, 48) of the upper and lower airflow-directing means (40, 42) has a straightening plate (44a, 48a) extending in the horizontal direction from the airflow-directing plate, the straightening plate being inclined at an angle not more than an inclined angle of the upper or lower plate (30b, 30c) with respect to a horizontal plane.

14. A cooker according to claim 1, characterized by further comprising:

upper and lower cooking trays (22a, 22b) arranged parallel to the top plate (12a) of the casing (12) and separated from each other, the suction holes (24) being opened in a space between the upper and lower cooking trays, the upper discharge holes (26) being opened in a space between the top plate of the casing and the upper cooking tray, and said lower discharge holes (28) being opened to a space between the bottom plate (12b) of the casing and the lower cooking tray.

## Revendications

1. Cuisinière à circulation d'air chaud, comprenant :

un boîtier (12) en forme de boîte ayant des plaques supérieure et inférieure (12a, 12b) et plusieurs plaques latérales (12c, 12d, 12e) et délimitant une chambre de chauffage (14) destinée à contenir des aliments, une des plaques latérales (12c) ayant plusieurs trous d'aspiration (24) formés dans une partie centrale, et des trous d'évacuation (26, 28),

un couvercle (30) fixé à la surface externe de la première plaque latérale (12c) et destiné à délimiter, en association avec la première plaque latérale (12c), une chambre de stockage (32) communiquant avec les trous d'aspiration (24) et les trous d'évacuation (26, 28),

un ventilateur (34) placé dans la chambre de stockage et destiné à être tourné vers les trous d'aspiration (24), le ventilateur étant entraîné dans un sens prédéterminé afin qu'il aspire l'air de la chambre de chauffage (14) vers la chambre de stockage (31) par les trous d'aspiration (24) et provoque la circulation de l'air dans un passage annulaire, en sens prédéterminé, dans la chambre de stockage (32), et l'évacuation de l'air vers la chambre de chauffage (14) par les trous d'évacuation (26, 28),

un organe de chauffage (36) placé dans la chambre de stockage (32), le long de la périphérie externe du ventilateur (34), et destiné à chauffer l'air aspiré dans la chambre de stockage, et

un dispositif destiné à diriger un courant d'air, placé dans la chambre de stockage (32) et destiné à guider une partie du courant d'air vers les trous d'évacuation (26, 28),

caractérisé en ce que

un ensemble de trous supérieurs d'évacuation (26) est formé dans une première zone qui est placée au-dessus des trous d'aspiration (24) et qui est disposée en direction horizontale, et un autre ensemble de trous inférieurs d'évacuation (28) est formé dans une seconde zone qui est placée au-dessous des trous d'aspiration (24) et qui est disposée en direction horizontale,

le couvercle (30) comporte une plaque inférieure (30a) séparée de la première plaque latérale (12c) mais tournée vers celle-ci, une plaque supérieure (30b) placée en face des trous supérieurs (26) d'évacuation et disposée en direction horizontale, la plaque supérieure (30b) étant inclinée afin qu'elle dirige le courant d'air vers les trous supérieurs (26) d'évacuation, et une plaque inférieure (30c) placée en face des trous inférieurs d'évacuation (28) et disposée en direction horizontale, la plaque inférieure (30c) étant inclinée afin qu'elle dirige le courant d'air vers les trous inférieurs d'évacuation (28),

le dispositif destiné à diriger le courant d'air comporte un dispositif supérieur et un dispositif inférieur (40, 42) destinés à diriger le courant d'air, le dispositif supérieur (40) ayant au moins une plaque (44) de direction de courant d'air fixée à la plaque supérieure (30b) du couvercle (30) et destinée à empêcher qu'une partie du courant d'air provenant du ventilateur (34) ne s'écoule dans la direction prédéterminée et à guider cette partie du courant d'air vers ceux des trous supérieurs d'évacuation (26) qui sont placés en amont de la partie du passage annulaire qui est disposée dans la première zone, et le dispositif inférieur (42) destiné à diriger le courant d'air ayant au moins une plaque (48) de direction de courant d'air fixée à la plaque inférieure (30c) du couvercle (30) et destinée à empêcher qu'une partie du courant d'air provenant du ventilateur (34) ne s'écoule dans la direction prédéterminée et à guider cette partie du courant d'air vers ceux des trous inférieurs d'évacuation (28) qui sont placés en amont de la partie du passage annulaire qui est disposée dans la seconde zone, les plaques (44, 48) de direction de courant d'air étant disposées en dehors par rapport à l'organe de chauffage (36).

2. Cuisinière selon la revendication 1, caractérisée en ce que les plaques (44, 48) de direction de courant d'air des dispositifs supérieur et inférieur (40, 42) destinés à diriger le courant d'air, sont symétriques l'une de l'autre par rapport au centre de rotation du ventilateur (34).

3. Cuisinière selon la revendication 1, caractérisée en ce que chacune des plaques (44, 48) de direction de courant d'air est disposée en direction verticale.

4. Cuisinière selon la revendication 1, caractérisée en ce que le dispositif supérieur (40) destiné à diriger le courant d'air comporte une seconde plaque (46a) de direction de courant d'air qui est fixée à la plaque inférieure (30a) du couvercle (30), qui est placée entre le ventilateur (34) et l'organe de chauffage (36) et qui est disposée afin qu'elle soit contiguë à la plaque (44) de direction de courant d'air, et le dispositif inférieur (42) destiné à diriger le courant d'air comprend une seconde plaque (50a) de direction de courant d'air qui est fixée à la plaque inférieure (30a) du couvercle (30) qui est placée entre le ventilateur (34) et l'organe de chauffage (36) et qui est disposée afin qu'elle soit contiguë à la plaque (48) de direction de courant d'air.

5. Cuisinière selon la revendication 4, caractérisée en ce que chacune des secondes plaques (46a, 50a) de direction de courant d'air part d'une région proche de la plaque correspondante de direction de courant d'air vers le centre de rotation du ventilateur (34).

6. Cuisinière selon la revendication 4, caractérisée en ce que le diamètre du ventilateur (34) est réglé entre environ la moitié et le tiers de la largeur de la chambre de chauffage (14) en direction horizontale.

7. Cuisinière selon la revendication 4, caractérisée en ce que la distance comprise entre les secondes plaques (46a, 50a) de direction de courant d'air et la périphérie du ventilateur (34) est réglée entre environ le dixième et le vingtième du diamètre du ventilateur (34).

8. Cuisinière selon la revendication 4, caractérisée en ce que le dispositif supérieur (40) destiné à diriger le courant d'air comporte une troisième plaque (46b) de direction du courant d'air placée parallèlement à la seconde plaque (46a) de direction de courant d'air du côté aval du courant d'air dans la chambre de stockage (32) par rapport à la seconde plaque (46a) de direction de courant d'air, le dispositif inférieur (42) destiné à diriger le courant d'air comporte une troisième plaque (50b) de direction de courant d'air disposée parallèlement à la seconde plaque (50a) de direction de courant d'air du côté aval du courant d'air dans la chambre de stockage (32) par rapport à la seconde plaque (50a) de direction de courant d'air, et les distances comprises entre les seconde et troisième plaques de direction de courant d'air sont réglées dans la plage comprise entre le tiers et le sixième environ du diamètre du ventilateur (34).

9. Cuisinière selon la revendication 8, caractérisée en ce que la distance comprise entre chacune des troisièmes plaques (46b, 50b) de direction de courant d'air et la périphérie du ventilateur (34) est réglée dans la plage comprise entre le cinquième et le dixième environ du diamètre du ventilateur.

10. Cuisinière selon la revendication 8, caractérisée en ce que la distance comprise entre chacune des secondes et troisièmes plaques (46a, 46b, 50a, 50b) de direction de courant d'air et la périphérie de l'organe de chauffage (36) est réglée dans une plage comprise entre la moitié et le dixième environ du diamètre de l'organe de chauffage.

11. Cuisinière selon la revendication 1, caractérisée en ce que

le dispositif supérieur (40) destiné à diriger le courant d'air a plusieurs plaques (44) de direction de courant d'air fixées à la plaque supérieure, les plaques de direction de courant d'air étant séparées les unes des autres avec des intervalles égaux en direction horizontale et étant disposées en direction verticale, et

le dispositif inférieur (42) destiné à diriger le courant d'air a plusieurs plaques (48) de direction de courant d'air fixées à la plaque inférieure, les plaques de direction de courant d'air étant séparées les unes des autres avec des intervalles égaux en direction horizontale et étant disposées en direction verticale.

12. Cuisinière selon la revendication 11, caractérisée en ce que les longueurs des plaques (44, 48) de direction de courant d'air des dispositifs supérieur et inférieur (40, 42) destinés à diriger le courant d'air, en direction verticale, diminuent progressivement de celle qui est placée du côté amont du courant d'air dans la chambre de stockage (32) vers celle qui est placée du côté aval.

13. Cuisinière selon la revendication 11, caractérisée en ce que chacune des plaques (44, 48) de direction de courant d'air des dispositifs supérieur et inférieur (40, 42) destinés à diriger le courant d'air a une plaque de redressement (44a, 48a) disposée en direction horizontale depuis la plaque de direction de courant d'air, la plaque de redressement étant inclinée avec un angle qui n'est pas supérieur à l'angle d'inclinaison de la plaque supérieure ou inférieure (30b, 30c) par rapport à un plan horizontal.

14. Cuisinière selon la revendication 1, caractérisée en ce qu'elle comporte en outre

des plateaux supérieur et inférieur (22a, 22b) de cuisson disposés parallèlement à la plaque supérieure (12a) du boîtier (12) et séparés l'un de l'autre, les trous d'aspiration (24) débouchant dans un espace compris entre les plateaux supérieur et inférieur de cuisson, les trous supérieurs d'évacuation (26) débouchant dans un espace compris entre la plaque supérieure du boîtier et le plateau supérieur de cuisson, et les trous inférieurs d'évacuation (28) débouchant dans un espace compris entre la plaque inférieure (12b) du boîtier et le plateau inférieur de cuisson.

## Ansprüche

1. Umluftherd, umfassend

ein kastenartiges Gehäuse (12), das Ober- und Bodenplatten (12a, 12b) sowie eine Anzahl von Seitenplatten (12c, 12d, 12e) aufweist und eine Heizkammer (14) zum Aufnehmen von Nahrungsmittel (darin) festlegt, wobei eine der Seitenplatten (12c) eine Anzahl von in einem mittleren Bereich derselben geformten Ansaugöffnungen (24) und jeweils eine Anzahl von Auslaßöffnungen (26, 28) aufweist,

eine an der Außenfläche der einen Seitenplatte (12c) befestigte Abdeckung (30), die zusammen mit der einen Seitenplatte (12c) eine mit den Ansaugöffnungen (24) und den Auslaßöffnungen (26, 28) kommunizierende Aufnahmekammer (32) festlegt,

ein in der Aufnahmekammer angeordnetes, den Ansaugöffnungen (24) zugewandtes und in einer vorbestimmten Richtung rotierendes Gebläse (34) zum Ansaugen von Luft aus der Heizkammer (14) in die Aufnahmekammer (31) über die Ansaugöffnungen (24), um die Luft in einem ringförmigen Durchgang oder Kanal in der vorbestimmten Richtung in der Aufnahmekammer (32) strömen zu lassen und die Luft über die Auslaßöffnungen (26, 28) in die Heizkammer (14) abzuführen,

ein in der Aufnahmekammer (32) längs des Außenumfangs des Gebläses (34) angeordnetes Heizelement (36) zum Erwärmen der in die Aufnahmekammer angesaugten Luft und

eine in der Aufnahmekammer (32) vorgesehene Luftstrom-Leiteinrichtung zum Führen eines Teils des Luftstroms zu den Auslaßöffnungen (26, 28),

dadurch gekennzeichnet, daß

eine Anzahl von oberen Auslaßöffnungen (26) in einem ersten Bereich ausgebildet sind, der sich über den Ansaugöffnungen (24) befindet und sich in waagerechter Richtung erstreckt, und eine andere Anzahl unterer Auslaßöffnungen (28) in einem zweiten Bereich ausgebildet sind, der sich unterhalb der Ansaugöffnungen (24) befindet und sich in waagerechter Richtung erstreckt,

die Abdeckung (30) eine von der einen Seitenplatte (12c) entfernt angeordnete und dieser zugewandte Bodenplatte (30a), eine den oberen Auslaßöffnungen (26) gegenüberstehende und sich in waagerechter Richtung erstreckende obere Platte (30b), die so geneigt ist, daß sie den Luftstrom zu den oberen Auslaßöffnungen (26) leitet, und eine den unteren Auslaßöffnungen (28) gegenüberstehende und sich in waagerechter Richtung erstreckende untere Platte (30c), die so geneigt ist, daß sie den Luftstrom zu den unteren Auslaßöffnungen (28) leitet, aufweist, (und)
die Luftstrom-Leiteinrichtung obere und untere Luftstrom-Leiteinheiten (40, 42) aufweist, von denen die obere Luftstrom-Leiteinheit (40) mindestens eine an der oberen Platte (30b) der Abdeckung (30) befestigte Luftstrom-Leitplatte (44) aufweist, um einen Teil des Luftstroms vom Gebläse (34) an einer Strömung in der vorbestimmten Richtung zu hindern und diesen Teil des Luftstroms zu den(jenigen) oberen Auslaßöffnungen (26) zu leiten, die stromauf des im ersten Bereich liegenden Teils des ringförmigen Durchgangs oder Kanals angeordnet sind, und die untere Luftstrom-Leiteinheit (42) mindestens eine an der unteren Platte (30c) der Abdeckung (30) befestigte Luftstrom-Leitplatte (48) aufweist, um einen Teil des Luftstroms vom Gebläse (34) an einer Strömung in der vorbestimmten Richtung zu hindern und diesen Teil des Luftstroms zu den(jenigen) unteren Auslaßöffnungen (28) zu leiten, die stromauf des im zweiten Bereich liegenden Teils des ringförmigen Kanals oder Durchgangs angeordnet sind, wobei die Luftstrom-Leitplatten (44, 48) außerhalb vom Heizelement (36) angeordnet sind.

2. Umluftherd nach Anspruch 1, dadurch gekennzeichnet, daß die Luftstrom-Leitplatten (44, 48) der oberen bzw. unteren Luftstrom-Leiteinheiten (40, 42) in bezug auf das Rotationszentrum des Gebläses (34) punktsymmetrisch zueinander angeordnet sind.

3. Umluftherd nach Anspruch 1, dadurch gekennzeichnet, daß die Luftstrom-Leitplatten (44, 48) jeweils in lotrechter Richtung verlaufen.

4. Umluftherd nach Anspruch 1, dadurch gekennzeichnet, daß die obere Luftstrom-Leiteinheit (40) eine zweite Luftstrom-Leitplatte (46a) aufweist, die an der Bodenplatte (30a) der Abdeckung (30) befestigt, zwischen dem Gebläse (34) und dem Heizelement (36) angeordnet und angrenzend zur Luftstrom-Leitplatte (44) vorgesehen ist, und die untere Luftstrom-Leiteinheit (42) eine zweite Luftstrom-Leitplatte (50a) aufweist, die an der Bodenplatte (30a) der Abdeckung (30) befestigt, zwischen dem Gebläse (34) und dem Heizelement (36) angeordnet und angrenzend zur Luftstrom-Leitplatte (48) vorgesehen ist.

5. Umluftherd nach Anspruch 4, dadurch gekennzeichnet, daß jede der zweiten Luftstrom-Leitplatten (46a, 50a) von dem Bereich dicht an der betreffenden Luftstrom-Leitplatte in Richtung auf das Rotationszentrum des Gebläses (34) verläuft.

6. Umluftherd nach Anspruch 4, dadurch gekennzeichnet, daß der Durchmesser des Gebläses (34) mit einer Größe im Bereich von etwa 1/2 bis 1/3 der Breite der Heizkammer (14) in waagerechter Richtung gewählt ist.

7. Umluftherd nach Anspruch 4, dadurch gekennzeichnet, daß ein Abstand zwischen den zweiten Luftstrom-Leitplatten (46a, 50a) und dem Umfang des Gebläses (34) mit einer Größe im Bereich von etwa 1/10 bis 1/20 des Durchmessers des Gebläses (34) gewählt ist.

8. Umluftherd nach Anspruch 4, dadurch gekennzeichnet, daß die obere Luftstrom-Leiteinheit (40) eine dritte Luftstrom-Leitplatte (46b) aufweist, die parallel zur zweiten Luftstrom-Leitplatte (46a) an der Stromabseite des Luftstroms in der Aufnahmekammer (32) in bezug auf die zweite Luftstrom-Leitplatte (46a) angeordnet ist, die untere Luftstrom-Leiteinheit (42) eine dritte Luftstrom-Leitplatte (50b) aufweist, die parallel zur zweiten Luftstrom-Leitplatte (50a) an der Stromabseite des Luftstroms in der Aufnahmekammer (32) in bezug auf die zweite Luftstrom-Leitplatte (50a) angeordnet ist, und die Abstände zwischen den zweiten und dritten Luftstrom-Leitplatten mit einer Größe im Bereich von etwa 1/3 bis 1/6 des Durchmessers des Gebläses (34) gewählt sind.

9. Umluftherd nach Anspruch 8, dadurch gekennzeichnet, daß der Abstand zwischen jeder der dritten Luftstrom-Leitplatten (46b, 50b) und dem Umfang des Gebläses (34) mit einer Größe im Bereich von etwa 1/5 bis 1/10 des Durchmessers des Gebläses gewählt ist.

10. Umluftherd nach Anspruch 8, dadurch gekennzeichnet, daß der Abstand zwischen jeder der zweiten und dritten Luftstrom-Leitplatten (46a, 46b, 50a, 50b) und dem Umfang des Heizelements (36) mit einer Größe im Bereich von etwa 1/2 bis 1/10 des Durchmessers des Heizelements gewählt ist.

11. Umluftherd nach Anspruch 1, dadurch gekennzeichnet, daß
die obere Luftstrom-Leiteinheit (40) eine Anzahl von an der oberen Platte befestigten Luftstrom-Leitplatten (44) aufweist, die längs der waagerechten Richtung in gleichen Abständen voneinander getrennt sind und in lotrechter Richtung verlaufen, und
die untere Luftstrom-Leiteinheit (42) eine Anzahl von an der unteren Platte befestigten Luftstrom-Leitplatten (48) aufweist, die längs der waagerechten Richtung in gleichen Abständen voneinander getrennt sind und in lotrechter Richtung verlaufen.

12. Umluftherd nach Anspruch 11, dadurch gekennzeichnet, daß die Längen der Luftstrom-Leitplatten (44, 48) der oberen und unteren Luftstrom-Leiteinheiten (40, 42) sich in der lotrechten Richtung von der an der Stromaufseite des Luftstroms in der Aufnahmekammer (32) angeordneten (Leitplatte) zu der an dessen Stromabseite angeordneten (Leitplatte) allmählich verkleinern.

13. Umluftherd nach Anspruch 11, dadurch gekennzeichnet, daß jede der Luftstrom-Leitplatten (44, 48) der oberen und unteren Luftstrom-Leiteinheiten (40, 42) eine sich von der Luftstrom-Leitplatte in waagerechter Richtung erstreckende Beruhigungsplatte (44a, 48a) aufweist, die unter einem Winkel geneigt ist, der nicht größer ist als ein Neigungswinkel von oberer und unterer Platte (30b, 30c) gegenüber einer waagerechten Ebene.

14. Umluftherd nach Anspruch 1, gekennzeichnet durch parallel zur Oberplatte (12a) des Gehäuses (12) angeordnete und voneinander beabstandete obere und untere Garschalen (22a, 22b), wobei die Ansaugöffnungen (24) in einen Raum zwischen den oberen und unteren Garschalen münden, die oberen Auslaßöffnungen (26) in einen Raum zwischen der Oberplatte des Gehäuses und der oberen Garschale münden und die unteren Auslaßöffnungen (28) in einen Raum zwischen der Bodenplatte (12b) des Gehäuses und der unteren Garschale münden.

# FIG. 1

# FIG. 2

# FIG. 3

# FIG. 4

13

# F I G. 5

# F I G. 6

# FIG. 7

# FIG. 8

# FIG. 9

# FIG. 10